# EUROPÄISCHE PATENTANMELDUNG

(11) **EP 0 899 516 A2**
(43) Veröffentlichungstag der Anmeldung: **03.03.1999**
(21) Anmeldenummer: 98115487.5
(22) Anmeldetag: 18.08.1998
(51) Int. Cl.: F24D 3/16

(54) **Baueinheit zur Erstellung einer Raumheizungs- bzw. Kühlungsanlage**

(30) Priorität: 30.08.1997 DE 29715643 U; 23.02.1998 DE 19807579
(71) Anmelder: Reckzeh, Manfred, 63457 Hanau (DE)
(72) Erfinder: Reckzeh, Manfred, 63457 Hanau (DE)
(74) Vertreter: Bonsmann, Manfred, Dipl.-Ing.

(57) **Zusammenfassung**

Die Erfindung betrifft eine Baueinheit zur Erstellung einer Raumheizungs- bzw. Kühlungsanlage mit in Hohlräumen von raumbegrenzenden Bauteilen angeordneten Heiz- bzw. Kühlrohren mit auf diesen aufsetzbaren Wärmeleitlamellen. Dabei ist ein auf einem tragenden Bauteil angeordneter vorzugsweise aus isolierendem Material bestehender Grundkörper (3) vorgesehen, der von einer plattenförmigen Abdeckeinheit (6) abgedeckt wird. Der Grundkörper weist zur Abdeckeinheit hin Ausnehmungen (8) zur Aufnahme wenigstens eines Heiz- bzw. Kühlrohres (10) mit aufgesetzten Wärmeleitlamellen (12) auf, wobei die Ausnehmungen (8) durch an die Abdeckeinheit anliegende Stützbereiche (9) des Grundkörpers wenigstens teilweise seitlich begrenzt sind. In einer ersten bevorzugten Ausführungsform liegen die Wärmeleitlamellen (12) direkt gegen die Abdeckeinheit (6) an. In einer zweiten bevorzugten Ausführungsform sind zusätzliche Abdeckungen vorgesehen, deren Oberseite gegen die plattenförmige Abdeckeinheit (6) anliegt.

## Beschreibung

Die Erfindung betrifft eine Baueinheit zur Erstellung einer Raumheizungs- bzw. Kühlungsanlage mit in Hohlräumen von raumbegrenzenden Bauteilen angeordneten Heiz- bzw. Kühlrohren mit auf diesen aufsetzbaren Wärmeleitlamellen.

Derartige Baueinheiten eignen sich insbesondere für den Trockenaufbau von Wand-, Decken- oder Fußbodenheizungsanlagen, die prinzipiell - wie nachfolgend nicht jedesmal explizit erwähnt - auch zur Kühlung eingesetzt werden können. Die Wärmeleitlamellen dienen dazu, einen möglichst gleichmäßigen und direkten Wärmekontakt zwischen Heizrohren und den raumbegrenzenden Bauteilen, also dem Fußboden, den Wänden oder der Decke des Raumes, herzustellen, so daß die erforderliche Heizleistung mit möglichst geringer Heizrohrlänge sowie möglichst großflächig erzielt werden kann.

Aus der CH 650 584 A5 ist eine Abdeckung für eine Raumheizungs- bzw. Kühlungsanlage der eingangs genannten Art bekannt, bei der Schalkörper mit lose gehalterten Wärmeleitlamellen auf vormontierte Heizrohre aufgesetzt werden, wodurch die Mittelbereiche der Wärmeleitlamellen auf die Heizrohre gedrückt bzw. aufgeclipst werden.

Ein Nachteil der bekannten Abdeckung liegt in der relativ großen Bauhöhe. Zum Erzielen ausreichender Isolationswerte und zum Erfüllen der einschlägigen Normen ist es nämlich bei den bekannten Systemen erforderlich, unterhalb der Rohre eine durchgehende Isolierschicht vorzusehen. Die benötigte Bauhöhe (ohne Boden- oder Wandbelag) bestimmt sich aus der Dicke dieser Isolierschicht zuzüglich der Höhe der Schalkörper.

Die Aufgabe der vorliegenden Erfindung besteht darin, eine Baueinheit der eingangs genannten Art dahingehend zu verbessern, daß bei einfacher Montage eine geringe Bauhöhe bei voller Isolationswirkung gewährleistet ist.

Erfindungsgemäß wird diese Aufgabe dadurch gelöst, daß ein auf einem tragenden Bauteil angeordneter Grundkörper vorgesehen ist, der von einer plattenförmigen Abdeckeinheit abgedeckt wird, und daß der Grundkörper zur Abdeckeinheit hin Ausnehmungen zur Aufnahme wenigstens eines Heiz- bzw. Kühlrohres mit aufgesetzten Wärmeleitlamellen aufweist, wobei die Ausnehmungen durch an die Abdeckeinheit anliegende Stützbereiche des Grundkörpers wenigstens teilweise seitlich begrenzt sind.

Das erfindungsgemäße Bauteil kann mit gegenüber dem Stand der Technik geringerer Bauhöhe bei gleichbleibender Isolationswirkung realisiert werden, da die Wärmeleitlamellen und die Rohre in profilierte Ausnehmungen des vorzugsweise als Isolierkörper ausgebildeten Grundkörpers versenkt sind. Im Bereich der Ausnehmungen entstehen Hohlräume, die eine ausreichende Isolation zwischen Trägerschicht und den Wärmeleitlamellen gewährleisten. Somit kann in diesem Bereich die Dicke des als Isolierkörper ausgebildeten Grundkörpers deutlich geringer als bei bekannten Aufbauten gewählt werden, so daß insgesamt eine deutlich geringere Bauhöhe (z.B. 20 mm statt 40 mm) erreicht werden kann. Im Bereich der die Abdeckeinheit tragenden Stützbereiche ist die Dicke des vorzugsweise als Isolierkörper ausgebildeten Grundkörpers ausreichend groß, um die vorgeschriebenen Wärmedämmungseigenschaften zu erzielen.

In einer ersten bevorzugten Ausführungsform gemäß den Ansprüchen 3 bis 5 kann vorgesehen sein, daß die Wärmeleitlamellen direkt gegen die Abdeckeinheit anliegen, um einen guten Wärmeübergang zu gewährleisten, und daß erste, quer zum Heiz- bzw. Kühlrohr verlaufende Stützbereiche seitlich an die Wärmeleitlamelle angrenzend angeordnet sind. Die Ausnehmungen sind somit durch den vorzugsweise aus isolierendem Material bestehenden Grundkörper selbst gebildet und sind zur Abdeckeinheit hin offen. Um die Abdeckeinheit abzustützen und ein Durchbiegen derselben bei Belastung zu vermeiden, sind die quer zum Heizrohr verlaufenden ersten Stützbereiche vorgesehen. Diese können jeweils in beiden Richtungen an einen Rohr-Durchgangsbereich angrenzen. Zusätzlich können im wesentlichen parallel zum Rohr verlaufende zweite Stützbereiche im Grundkörper vorgesehen sein, um die Abstützung der Abdeckeinheit zu verbessern. Diese zweiten Stützbereiche grenzen vorzugsweise an die zum Rohr parallel verlaufenden Stirnseiten der Wärmeleitlamellen an.

Bei der beschriebenen ersten Ausführungsform wechseln sich in Rohrrichtung Bereiche, in denen Lamellen auf das Rohr aufgesetzt sind, und Bereiche mit (ersten) Stützbereichen jeweils ab, wobei die Stützbereiche jeweils einen Durchgangsbereich für das Rohr freilassen. Der Durchgangsbereich kann auf den Rohrdurchmesser abgestimmt sein und leicht konisch nach innen gewölbte Seitenwände oder eine andere geeignete Form aufweisen, so daß das Rohr in der Durchgangsöffnung fixiert werden kann, wodurch die Montage (vor allem an Wand und Decken) erleichtert wird. Die Breite und der Abstand der ersten Stützbereiche wird jeweils auf die Tragfähigkeit der Abdeckeinheit abgestimmt. Die Stützbereiche können vorzugsweise einstückig (integral) mit dem Grundkörper ausgebildet sein.

Die besonderen Vorteile dieser Ausführungsform liegen in der einfachen Montierbarkeit. Außerdem ist eine entsprechende Baueinheit besonders preiswert herzustellen, da lediglich eine entsprechende Formgebung des Grundkörpers erforderlich ist.

In einer zweiten bevorzugten Ausführungsform gemäß den Ansprüchen 6 bis 10 kann die Baueinheit zusätzliche Abdeckungen aufweisen, deren Oberseite gegen die plattenförmige Abdeckeinheit anliegt. Durch diese Abdeckeinheiten wird in vorteilhafter Weise eine insgesamt plane Oberfläche für die Auflage der raumbegrenzenden Bauteile geschaffen, die eine große Stabilität gegenüber Durchbiegungen od. dgl. aufweist.

Bevorzugt kann vorgesehen sein, daß die Seitenbereiche der Wärmeleitlamellen an den Innenseiten der Abdeckungen mittels an Stirnenden der Abdeckungen befestigter Traversen festklemmbar sind und die Höhe der Traversen so gewählt ist, daß diese gleichzeitig die Abdeckungen gegenüber dem tragenden Bauteil abstützen.

Die Erfindung wird nachfolgend unter Bezugnahme auf die Zeichnungen beispielhaft näher erläutert. Es zeigen:
- Fig. 1: eine schematische Ansicht einer erfindungsgemäßen Baueinheit für eine Fußbodenheizung gemäß der zweiten bevorzugten Ausführungsform, dargestellt in einer Schnittdarstellung quer zur Heizrohrrichtung,
- Fig. 2: eine vergrößerte Ansicht des Bereiches A in Fig. 1,
- Fig. 3: eine Draufsicht auf eine Abdeckung gemäß der zweiten bevorzugten Ausführungsform,
- Fig. 3A: eine Querschnittsansicht der Abdeckung gem. Fig. 3,
- Fig. 4: eine Draufsicht auf eine mit erfindungsgemäßen Bauelementen aufgebaute Raumheizungsanlage gemäß der zweiten Ausführungsform,
- Fig. 5: eine Draufsicht auf zwei nebeneinanderliegende Reihen von Grundkörpern gemäß der ersten Ausführungsform der Erfindung,
- Fig. 6: eine Querschnittsansicht entlang der Linie A-A von Fig. 5 mit eingesetzten Heizrohren und Lamellen und
- Fig. 7: eine Querschnittsdarstellung entlang der Linie B-B von Fig. 5.

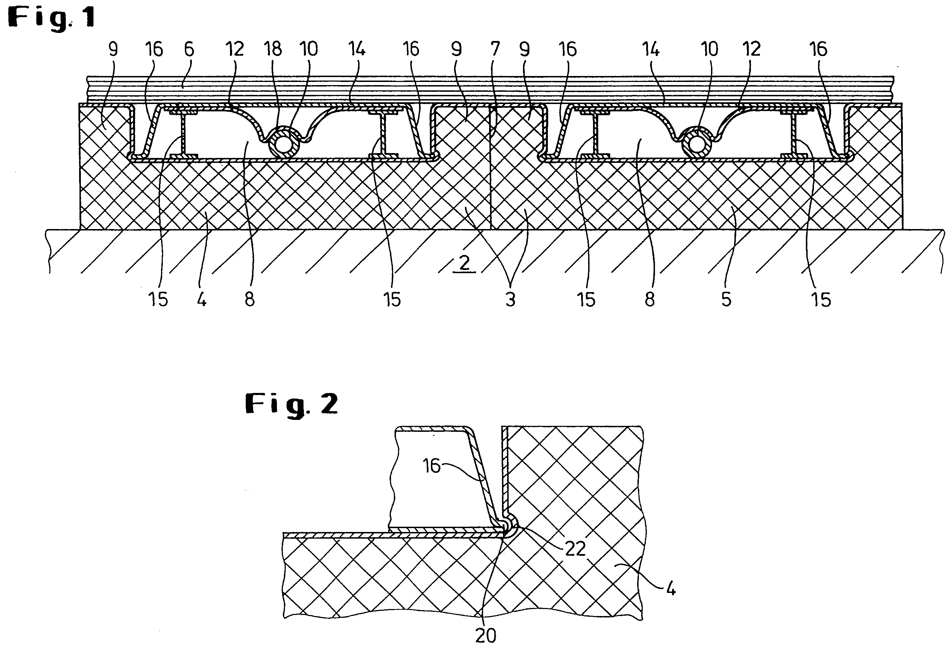

Bei der in den Fig. 1 bis 4 dargestellten zweiten bevorzugten Ausführungsform der Erfindung ist gemäß Fig. 1 auf einer Betondecke 2 ein Grundkörper 3 angeordnet. Der Grundkörper 3 besteht im dargestellten Beispiel aus zwei nebeneinanderliegenden Einheiten 4, 5, die an einer Stoßkante 7 überlappend bzw. mit einer Nut-und-Feder-Verbindung aneinandergrenzen. Abhängig von der zu beheizenden Fläche können beliebig viele der dargestellten, den Grundkörper 3 bildenden Einheiten in Reihe bzw. nebeneinander verlegt werden. Der Grundkörper 3 besteht aus einem isolierenden Material, wie z.B. Hartschaum mit Alufolie oder Styropor® mit oder ohne Polystyrolfolie kaschiert. Oberhalb des Grundkörpers 3 ist eine Abdeckeinheit 6 angeordnet, beispielsweise eine übliche Bauplatte. Auf dieser Abdeckeinheit 6 befindet sich ein - nicht dargestellter - Fußbodenbelag, wie z.B. ein Parkettbodenbelag. Der in Fig. 1 dargestellte Querschnitt des Grundkörpers 3 weist Ausnehmungen 8 sowie dazwischenliegende Stützbereiche 9 auf. In der Mitte der Ausnehmungen 8 sind quer zu der in der Figur dargestellten Schnittrichtung Heizrohre 10 angeordnet, die z.B. aus Kupfer, Kunststoff oder Verbundmaterialien bestehen können. Die von den Heizrohren 10 abgegebene Wärme wird über Wärmeleitlamellen 12 an den Fußboden abgegeben. Die aus Metall - z.B. aus Aluminium hergestellten - Wärmeleitlamellen 12 sind mit ihrem Mittelteil 18 auf die Heizrohre 10 teilumschließend aufgesetzt, wodurch die Heizrohre fixiert werden und gleichzeitig eine gute Wärmeleitung gewährleistet wird. Die Wärmeleitlamellen 12 liegen gegen aus Kunststoff - vorzugsweise aus Polystyrol-(PS)-Recyclaten - hergestellte, schalenförmige Abdeckungen 14 an. Die Kunststoffabdeckungen sind 14 konstruktiv so ausgebildet, daß die Abstützung der Abdeckeinheit 6 in jedem Bereich voll gewährleistet ist. Die Höhe der Abdeckungen 14 ist so an die der Ausnehmungen 8 angepaßt, daß die Abdeckungen mit ihrer Oberseite plan gegen die Abdeckeinheit 6 anliegen, so daß eine optimale Wärmeübertragung auf die Abdeckeinheit und damit auf den Fußbodenbelag sichergestellt wird. Hierdurch ergibt sich weiterhin eine im wesentlichen plane und tragfähige Oberfläche des Grundkörpers 3 mit den eingesteckten Abdeckungen 14. Die Wärmeleitlamellen 12 werden mittels an (nicht dargestellten) Stirnenden der Abdeckungen 14 befestigten Traversen 15 gegen die Innenseite der Abdeckungen 14 gedrückt und so fixiert. Die Traversen 15 erhöhen gleichzeitig die Stabilität der Abdeckungen 14 gegenüber Biegebeanspruchungen. In einer weiteren (nicht dargestellten) alternativen Ausführungsform des erfindungsgemäßen Baukörpers können auch pro Seitenbereich der Wärmeleitlamelle jeweils mehrere (z.B. zwei) Traversen 15 vorgesehen sein, wodurch ein gleichmäßiges Anliegen der Wärmeleitlamellen 12 und eine bessere Abstützung der Abdeckungen 14 gewährleistet wird.

Die Abdeckungen 14 weisen jeweils zwei Seitenwände 16 auf, die in den Ausnehmungen 8 des Grundkörpers 3 befestigt sind, wie in Fig. 2 näher dargestellt. Am unteren Ende der Seitenwände 16 der Abdeckungen 12 ist jeweils ein umlaufender Rand 20 vorgesehen, der zum Einrasten in einen in dem Grundkörper 3 vorgesehenen Hintergriff 22 ausgebildet ist. Die Seitenwände 16 der Abdeckungen 12 sind so ausgebildet, daß die Seitenwände 16 beim Einstecken in die Ausnehmungen nach innen gebogen werden. Bei Erreichen der Endposition rastet der Rand 20 in die Hintergriffe 22 ein, so daß die Abdeckung 12 in der Ausnehmung 8 fixiert wird. Diese Fixiermöglichkeit macht die erfindungsgemäße Baueinheit besonders für Wand- und Deckenmontage geeignet. Durch die Rastverbindung ist weiterhin eine Vorspannung der Wärmeleitlamellen 12 gegenüber dem Heizrohr 10 gegeben, die einen ausreichenden Anpreßdruck der Wärmeleitlamellen 12 an das Heizrohr 10 gewährleistet.

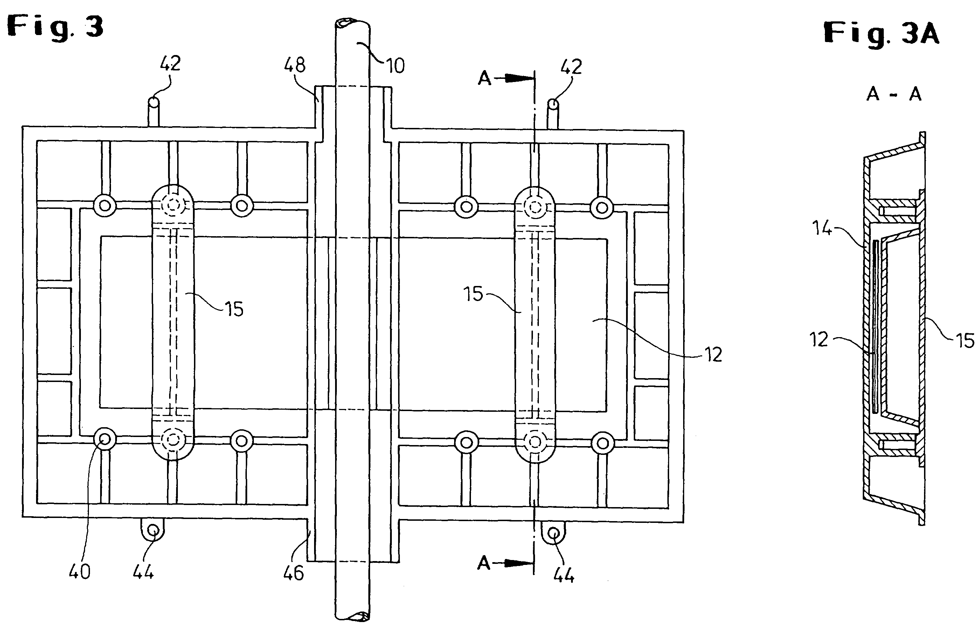

In den Fig. 3 und 3A ist eine vergrößerte Ansicht einer Abdeckung 14 dargestellt. Die Abdeckung weist innenseitig Rippenstrukturen zur Verstärkung auf. In regelmäßigen Abständen sind Zapfen 40 vorgesehen, auf die Traversen 15 zur Halterung der Wärmeleitlamellen 12 aufgesteckt werden können. Die Traversen 15 weisen vorzugsweise ein Doppel-T-Trägerprofil auf. Die Abdeckung 14 weist weiterhin Verbindungszapfenelemente 42 bzw. korrespondierende Verbindungselemente 44 auf, um mehrere Abdeckungen 14 miteinander zu verbinden. Das Heizrohr 10 wird durch in den Seitenflächen der Abdeckung vorgesehene Durchführungen 46, 48 von einer Abdeckung zu einer evtl. angrenzenden Abdeckung geführt. Dabei wird eine Art Tunnel gebildet, um das Heizrohr 10 vor äußeren Einflüssen zu schützen.

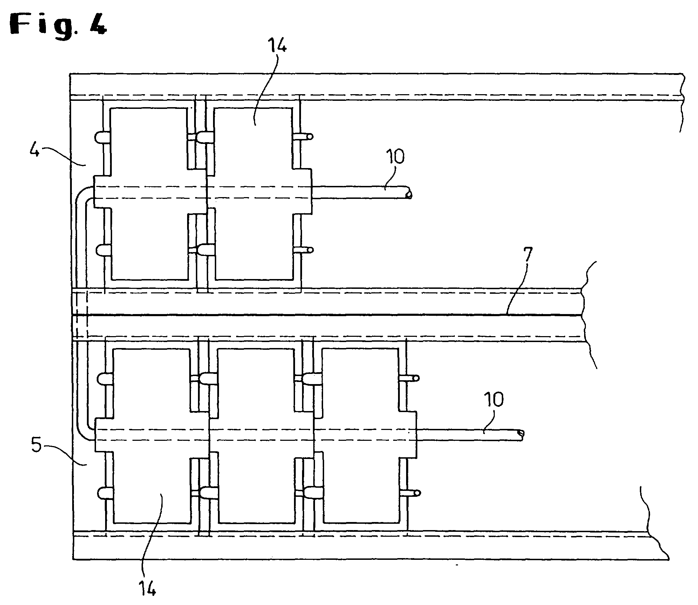

In Fig. 4 ist eine Draufsicht auf eine mit erfindungsgemäßen Bauelementen erstellte Raumheizungsanlage in teilweise montiertem Zustand dargestellt, wobei die Abdeckeinheit 6 und ein Fußbodenbelag noch nicht montiert sind. Die Montage einer erfindungsgemäßen Baueinheit gestaltet sich beispielhaft derart, daß zunächst die Grundkörper 4 und 5 mit den vorgefertigten Ausnehmungen 8 aneinanderstoßend auf den tragenden Bauteilen ausgelegt (Fußboden) bzw. befestigt werden (Decke, Wand). Anschließend wird das Heizrohr 10 schlangenlinienförmig in den Ausnehmungen der Grundkörper verlegt. Nachfolgend werden die Abdeckungen 14 mit den Wärmeleitlamellen 12 in die Ausnehmungen 8 eingerastet. Die dadurch entstehende plane und tragfähige Fläche wird dann mit einer Bauplatte 6 abgedeckt, auf die dann der Fußbodenbelag aufgebracht wird. Je nach Art und Beschaffenheit des Fußbodenbelags kann dieser selbstverständlich auch direkt auf die Oberseite der Abdeckungen 14 bzw. der Grundkörper 4, 5 aufgebracht werden.

Statt des vorstehend beschriebenen Trockenaufbaus kann mit Hilfe der erfindungsgemäßen Baueinheit gemäß der vorstehend beschriebenen Ausführungsform selbstverständlich auch ein Naßaufbau realisiert werden, bei welchem eine Estrichschicht anstelle der Bauplatte aufgebracht wird.

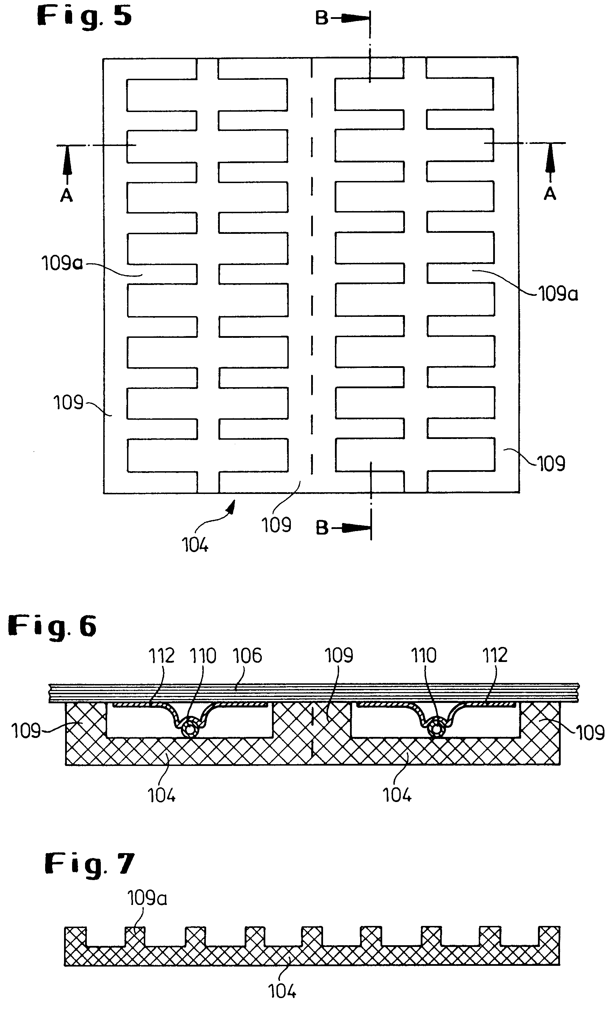

Bei der in den Fig. 5 bis 7 dargestellten ersten bevorzugten Ausführungsform liegen gem. Fig. 6 die Wärmeleitlamellen 112 direkt gegen eine als Bauplatte ausgebildete Abdeckeinheit 106 an. Die Abdeckeinheit 106 wird durch im wesentlichen parallel zu den Rohren verlaufende Stützbereiche 109, die integral mit dem aus einem der vorstehend genannten Material ausgebildeten Grundkörper gefertigt sind, abgestützt. Wie aus Fig. 5 ersichtlich, sind zusätzlich quer zum Rohr verlaufende Stützbereiche 109a vorgesehen, die jeweils einen mittigen Rohrdurchlaß aufweisen, so daß sich das in Fig. 7 dargestellte Querschnittsprofil ergibt. Hinsichtlich der weiteren Einzelheiten entspricht diese Ausführungsform weitgehend der vorstehend beschriebenen.

## Patentansprüche

1. Baueinheit zur Erstellung einer Raumheizungs- bzw. Kühlungsanlage mit in Hohlräumen von raumbegrenzenden Bauteilen angeordneten Heiz- bzw. Kühlrohren mit auf diesen aufsetzbaren Wärmeleitlamellen, dadurch gekennzeichnet, daß ein auf einem tragenden Bauteil (2) angeordneter Grundkörper (3) vorgesehen ist, der von einer plattenförmigen Abdeckeinheit (6) abgedeckt wird, und daß der Grundkörper zur Abdeckeinheit hin Ausnehmungen (8) zur Aufnahme wenigstens eines Heiz- bzw. Kühlrohres (10) mit aufgesetzten Wärmeleitlamellen (12) aufweist, wobei die Ausnehmungen durch an die Abdeckeinheit anliegende Stützbereiche (9) des Grundkörpers wenigstens teilweise seitlich begrenzt sind.

2. Baueinheit nach Anspruch 1, dadurch gekennzeichnet, daß der Grundkörper (3) überwiegend aus einem wärmeisolierenden Material besteht.

3. Baueinheit nach Anspruch 1 oder 2, dadurch gekennzeichnet, daß die Ausnehmungen profiliert ausgebildet sind.

4. Baueinheit nach einem der Ansprüche 1 bis 3, dadurch gekennzeichnet, daß die Wärmeleitlamellen (112) nur gegen die Abdeckeinheit (106) anliegen, um einen guten Wärmeübergang zu gewährleisten, und daß erste, quer zum Heiz- bzw. Kühlrohr (110) verlaufende Stützbereiche (109a) seitlich an die Wärmeleitlamelle angrenzend angeordnet sind.

5. Baueinheit nach Anspruch 4, dadurch gekennzeichnet, daß sich Paare von ersten Stützbereichen (109a) jeweils in beiden Richtungen an einen Rohr-Durchgangsbereich angrenzend erstrecken.

6. Baueinheit nach Anspruch 4 oder 5, dadurch gekennzeichnet, daß zweite, im wesentlichen parallel zu dem Heiz- bzw. Kühlrohr (110) verlaufende Stützbereiche (109) vorgesehen sind.

7. Baueinheit nach einem der Ansprüche 1 bis 3, dadurch gekennzeichnet, daß die Stützbereiche im wesentlichen parallel zu dem Heiz- bzw. Kühlrohr verlaufen, daß in den Ausnehmungen (8) des Grundkörpers (3) Abdeckungen (14) fixiert sind, deren Außenseiten die Ausnehmungen (8) zur plattenförmigen Abdeckeinheit (6) hin abschließen und gegen deren Innenseiten Teilbereiche der Wärmeleitlamellen (12) anliegen.

8. Baueinheit nach Anspruch 7, dadurch gekennzeichnet, daß die den raumbegrenzenden Bauteilen zugewandten Außenseiten der Abdeckungen (14) gegen die plattenförmige Abdeckeinheit (6) anliegen, um einen guten Wärmeübergang zu gewährleisten.

9. Baueinheit nach Anspruch 7 oder 8, dadurch gekennzeichnet, daß die Abdeckungen (14) Seitenwände (16) aufweisen, die zur Fixierung der Abdeckungen mit Rastnasen (20) in in dem Grundkörper (3) vorgesehene Hinterschnitte (22) einrasten.

10. Baueinheit nach einem der Ansprüche 7 bis 9, dadurch gekennzeichnet, daß die Seitenbereiche der Wärmeleitlamellen (12) an den zur plattenförmigen Abdeckeinheit parallel verlaufenden Innenseiten der Abdeckungen (14) befestigt sind, und daß die Mittelbereiche der Wärmeleitlamellen zur Umfassung der Heiz- bzw. Kühlrohre (10) ausgebildet sind.

11. Baueinheit nach Anspruch 10, dadurch gekennzeichnet, daß die Seitenbereiche der Wärmeleitlamellen (12) an den Innenseiten der Abdeckungen (14) mittels an Stirnenden der Abdeckungen 14 befestigter Traversen 15 festklemmbar sind, und die Höhe der Traversen so gewählt ist, daß diese gleichzeitig die Abdeckungen gegenüber dem tragenden Bauteil (2) abstützen.
